# DEMANDE DE BREVET EUROPEEN

(11) **EP 1 935 851 A1**
(43) Date de publication de la demande: **25.06.2008**
(21) Numéro de dépôt: 07020016.7
(22) Date de dépôt: 07.04.2003
(51) Int. Cl.: C02F 3/32, C02F 103/32

(54) **Plantations équipées pour le traitement d'effluents organiques par bio-assainissement**

(30) Priorité: 09.04.2002 FR 0204423
(62) Demande divisionnaire de: 03745830.4
(71) Demandeur: Phytorem, 13140 Miramas (FR)
(72) Inventeur: Arfi-Benayoun, Veronique, 13140 Miramas (FR); Benayoun, Bernard, 13140 Miramas (FR)
(74) Mandataire: Desaix, Anne

(57) **Abrégé**

La présente invention concerne le traitement d'effluents organiques, industriels, agricoles ou domestiques par bio-assainissement. Plus précisément, l'invention a trait à une plantation de bambous équipée pour le traitement des effluents organiques constituée d'îlots, chaque îlot étant aménagé sur un terrain formant un ou plusieurs plans inclinés se rencontrant dans une zone basse, et comprenant un dispositif d'amenée des effluents dans les zones plus élevées, un collecteur disposé dans la zone basse pour la récupération des effluents non infiltrés, et, le cas échéant, un dispositif de pompage des effluents non infiltrés et drainés par le collecteur en vue de leur retraitement, ladite plantation comportant au moins une espèce végétale choisie parmi les bambous capables de prélever par l'intermédiaire de leurs racines les matières polluantes d'effluents apportés sur chaque îlot. L'invention vise également un procédé de traitement des effluents organiques par bio-assainissement sur plantation de bambous.

## Description

La présente invention concerne le traitement d'effluents organiques, industriels, agricoles ou domestiques par bio-assainissement. Plus précisément, l'invention a trait à une plantation équipée pour le traitement des effluents organiques constituée d'îlots, chaque îlot étant aménagé sur un terrain formant un ou plusieurs plans inclinés se rencontrant dans une zone basse, et comprenant un dispositif d'amenée des effluents dans les zones plus élevées, un collecteur disposé dans la zone basse pour la récupération des effluents non infiltrés, et, le cas échéant, un dispositif de pompage des effluents non infiltrés et drainés par le collecteur en vue de leur retraitement, ladite plantation comportant au moins une espèce végétale choisie parmi celles capables de prélever par l'intermédiaire de leurs racines les matières polluantes d'effluents apportés sur chaque îlot. L'invention vise également un procédé de traitement des effluents organiques par bio-assainissement sur plantation de bambous.

Les effluents organiques d'origine agricole, industriels ou domestiques ne peuvent être rejetés dans le milieu naturel sans traitement préalable visant à dégrader la matière organique, à éliminer l'excès de matière minérale et notamment l'azote, le phosphore, le potassium et certains métaux lourds et hydrocarbures.

En particulier, la réglementation en France exige, en zone normale, l'abattement des matières en suspension et des matières oxydables, et la suppression des rejets des boues de station d'épuration dans les eaux de surface.

Les solutions d'assainissement utilisées à ce jour sont essentiellement les procédés de dépollution par épuration biologique en stations d'épuration pour les eaux usées et l'épandage sur sols cultivés pour les effluents agricoles. Ces procédés bien que satisfaisant aux obligations énoncées ci-dessus, présentent cependant divers inconvénients. En particulier, en ce qui concerne le traitement des eaux usées, la construction et la maintenance des stations d'épuration engendrent des coûts élevés, limitant leur intérêt pour les petites collectivités. D'autre part, les capacités de traitement de l'azote et du phosphore sont en général limitées. Enfin, les installations comprenant généralement des éléments en béton s'intègrent difficilement dans le paysage.

Certains procédés alternatifs ont été proposés pour tenter de remédier aux inconvénients énoncés ci-dessus. On citera en particulier le lagunage et la filtration sur lit de sable. Ces techniques reposent sur l'utilisation de sols suffisamment sableux pour permettre à la fois une bonne percolation et une bonne filtration des eaux à traiter dans un milieu toujours aéré. Ces techniques nécessitent également l'apport de sable qui se fait soit en remblai (tertre) soit après déblai du sol en place (lit, filtre, tranchée).

L'épuration par lagunage (Racault Y., Bois JS et al., 1997 ; le lagunage naturel : les leçons tirés de 15 ans de pratique en France; cahier technique, Agence de l'eau, CEMAGREF, SATESE, ENSP Rennes) repose sur la décantation des matières en suspensions dans des bassins peu profond (1 à 2m) et sur un temps de séjour élevé (minimum 20 jours). Les matières solubles venant de l'effluent ou de la fermentation des dépôts sont absorbées par des algues en suspensions qui décantent à leur tour. Cette technique nécessite beaucoup d'espace (10 m²/eh), un terrassement obligatoire, un entretien régulier et s'avère peu adapté aux effluents chargés issus de l'agroalimentaire sans dispositif d'aération complémentaire.

La filtration sur lit de sable requiert également de la surface, mais en moindre proportion par rapport au lagunage (de 1,5 m² à 5 m² selon la technologie mise en oeuvre : infiltration - percolation ou bien filtre à sable vertical). Ce mode d'épuration est celui préconisé en assainissement autonome et décrit dans la norme XP P16-603 août 1998, référence DTU 64.1. Cette technique pose néanmoins des problèmes de colmatage du sable avec la nécessité de le remplacer ou de ne plus l'utiliser afin qu'il se décolmate de lui-même. Elle est en fait efficace essentiellement sur les effluents contenant peu de matières en suspension.

Le bio-assainissement, aussi appelé phytoremédiation, pourrait également constituer une alternative aux techniques classique de traitement des effluents organiques. Le bio-assainissement est fondé sur l'idée d'utiliser les plantes, et en particulier leur capacité à prélever certains éléments du sol, pour la dépollution. Cependant, l'efficacité des prélèvements, les risques de contamination par la voie de la chaîne alimentaire et la capacité de résistance aux matières toxiques des plantes utilisées étant très variables selon les espèces, le choix de l'espèce utilisée en bio-assainissement est un critère déterminant pour l'efficacité globale de la technique et l'évaluation de son coût.

L'épandage sur culture de taillis de courte rotation est en expérimentation en France à l'heure actuelle sur trois essences spécifiques valorisables : le peuplier, le saule et l'eucalyptus (Environnement & Technique, juillet-août 2001, n°208 : la Bretagne expérimente le taillis à très courte rotation de saule ; TSM n°9 septembre 2001, Reportage : le traitement naturel des effluents des industries agroalimentaires).

La présente invention a pour but de proposer une solution pour le traitement des effluents organiques par bio-assainissement, à un coût d'installation et de fonctionnement réduit, permettant un abattement de 90 à 100% du phosphore et de l'azote, avec un risque de contamination minime tout en préservant le paysage et avec la possibilité de s'implanter sur des terres jusque là inexploitables : friches agricoles, zones inondables.

Elle vise plus particulièrement le traitement des effluents organiques de petites collectivités (production inférieure à 10000 eh) ou d'exploitations industrielles de type agroalimentaire ou agricole, en traitement complet ou en traitement tertiaire (c'est à dire après un dispositif d'épuration biologique classique, et ceci dans le but d'éliminer l'azote et le phosphore).

L'invention résulte, en partie, de l'utilisation des propriétés spécifiques des sols naturels en place pour l'aménagement de plantations équipées pour le traitement d'effluents organiques par bio-assainissement.

En particulier, l'invention porte sur une plantation équipée pour le traitement d'effluents organiques, caractérisée en ce qu'elle est constituée d'îlot(s), chaque îlot étant disposé sur un terrain formant un ou plusieurs plans inclinés se rencontrant dans une zone basse, et en ce qu'elle comprend
a) un dispositif d'amenée des effluents dans les zones plus élevées;
b) un collecteur disposé dans la zone basse pour la récupération des effluents non infiltrés ; et,
c) le cas échéant, un dispositif de pompage des effluents non infiltrés et drainés par le collecteur en vue de leur retraitement ;
ladite plantation comportant au moins une espèce végétale choisie parmi celles capables de prélever par l'intermédiaire de leurs racines les matières polluantes d'effluents apportés sur chaque îlot.

Il a en effet été constaté qu'il était possible d'utiliser de façon avantageuse les propriétés de faible perméabilité des terres agricoles, en général de nature faiblement sableuse, pour équiper une plantation pour le bio-assainissement, dans laquelle l'apport en effluents à traiter se fait en un ou quelques points de la plantation et l'alimentation en effluents sur l'ensemble de l'îlot est obtenue par simple écoulement par gravité des effluents dans le sens de la pente. La plantation équipée selon l'invention permet également, de récupérer les effluents non infiltrés en bas de pente pour les recycler de façon à permettre un traitement maximal des effluents irrigués ou épandus.

La pente du terrain est ainsi déterminée en fonction de la perméabilité des matériaux du sol en place de façon proportionnelle. Plus les sols sont imperméables, plus les pentes peuvent être faibles (pour permettre un temps de contact suffisant lors du ruissellement). Ces pentes sont comprises généralement entre 0,1% (sol limoneux argileux) et 1% (sol limono sableux). Elle s'évalue en fonction du coefficient de perméabilité K (en millimètre par heure) traduisant la plus ou moins grande capacité d'infiltration des eaux dans le sol. De préférence, le terrain choisi pour l'aménagement de la plantation a un coefficient de perméabilité inférieur à 500 mm/h, et de façon encore préférée, un coefficient de perméabilité inférieur à 30 mm/h.

La plantation en îlots permet de former des unités de traitements indépendantes : en particulier, l'apport des effluents sur chaque unité peut être contrôlé de façon indépendante.

Par « effluents organiques », il faut comprendre tout type d'effluents contenant de la matière organique provenant des collectivités, d'exploitation agricole ou d'industries de type agroalimentaire. En particulier, les effluents sont liquides (effluents de caves vinicoles par exemple) ou semi-liquides (boue). Ils peuvent être le cas échéant préalablement prétraités au moyen par exemple d'un dégrilleur, d'un dessableur et/ou d'un décanteur primaire, notamment pour les eaux usées.

Dans une forme de réalisation de l'invention, la plantation telle que décrite ci-dessus comprend une pluralité d'espèces végétales, les espèces plantées dans la région de l'îlot dans laquelle s'effectue l'absorption maximum des effluents (dite région de forte densité) appartenant à des premières espèces permettant de forte densité de peuplement, et les espèces plantées dans les régions périphériques de chaque îlot, notamment au niveau des zones d'apport des effluents, appartenant à des espèces dont la taille moyenne à maturité est plus importante que celle des premières espèces.

Les espèces plantées dans les zones d'apport des effluents récupèrent les premiers flots de l'effluents à traiter. Aussi, les matières organiques liées aux matières en suspension se déposent en premier dans ces zones. Ce sont par conséquent préférentiellement des espèces de grande taille, dont les parties aériennes représentent l'organe principal de dépollution. Les espèces de plus grande taille plantées dans les zones périphériques de chaque îlot permettent également de protéger la plantation des vents.

Au contraire, la partie liquide des effluents va s'écouler vers la région centrale de l'îlot. On choisit par conséquent de préférence des espèces capables de prélever des quantités importantes d'eau (partie liquide des effluents) et à forte capacité évaporatrice.

Dans un mode de réalisation particulier, on pourra choisir également dans les zones périphériques de chaque îlot exposées aù vent, des espèces résistantes au vent, qui ne sont cependant pas nécessairement des espèces de grande taille. Par exemple, les espèces au feuillage dense, et/ou au développement en touffe, permettent une protection du reste de la plantation aux vents dominants.

Le mélange d'espèces permet de manière générale de limiter les problèmes de propagation de maladies et d'empêcher une floraison simultanée d'une majorité de plantes au sein de chaque îlot, la floraison étant susceptible d'entraîner chez certaines espèces, un arrêt de la croissance et donc une baisse des prélèvements. Dans le cadre de la présente invention, l'utilisation d'une pluralité d'espèces est en plus un outil permettant de constituer des îlots dans lesquels le choix de l'espèce plantée est déterminé en fonction de leur localisation dans l'îlot afin d'optimiser les propriétés de prélèvement, et donc de bio-assainissement de chaque îlot.

On distingue en particulier le centre de l'îlot au niveau duquel le, prélèvement en eau doit être maximum, les régions élevées au niveau desquelles sont apportés les effluents en premier, et les régions exposées au vent, et notamment au vent dominant.

On distingue en outre la zone basse de l'îlot, au niveau de laquelle la tolérance des espèces aux excès d'eau doit être plus importante.

Dans une forme de réalisation particulière de la plantation, les espèces végétales sont plantées pour chaque îlot de façon concentrique, à raison d'une espèce par cercle et en ce que la région de forte densité est située dans la partie centrale de l'îlot. De façon préférée, la région dite de forte densité de chaque îlot est située dans la zone basse de la plantation, au niveau de laquelle les prélèvements peuvent être particulièrement importants, en particulier lorsqu'il s'agit d'effluents liquides.

Dans une autre forme de réalisation, la plantation selon l'invention comporte une ou plusieurs espèces choisies parmi celles dont la période de croissance maximale correspond à la période d'apport des effluents, permettant le traitement d'effluents dont la production est saisonnière.

Les espèces végétales capables de prélever les matières polluantes des effluents à traiter sont les espèces végétales choisies parmi celles dont les prélèvements racinaires sont les plus réguliers et les plus importants, et dont la matière organique prélevée s'accumule majoritairement dans les parties aériennes. Parmi les espèces végétales capables de prélever les matières polluantes des effluents à traiter, on peut citer en particulier les espèces suivantes :
*Populus deltoides, populus trichocarpa, un hydride de P. deltoides et P. trichocarpa, Salix viminalis, Salix exigua, Salix lucida, Salix eriocephala, Eucalyptus grandis, Eucalyptus amplifolia, Eucalyptus camaldulensis, Phragmites australis, Sagittaria rigida, Sagittaria latifolia, Typha latifolia, Scirpus acutus, Scirpus americanus, Hibiscus spp, Nuphar luteum,* Lemna *spp., Potamogeton pectinatus, Juncus effusus.*

L'invention résulte en outre de la mise en évidence que certaines espèces de bambous combinent certaines propriétés physiologiques avantageuses, particulièrement intéressantes pour leur utilisation en bio-assainissement :
- ce sont des plantes pérennes à feuilles persistantes toujours vertes, présentant une activité photosynthétique quasi continue et donc un prélèvement régulier avec deux phases de croissances (la tige / le rhizome) au lieu d'une pour les autres plantes utilisées jusqu'alors en phytoremédiation ;
- les prélèvements des parties aériennes sont très importants (eau, carbone et éléments minéraux) ;
- la plantation de bambous ne participe pas à la chaîne alimentaire, ce qui limite les risques de contamination ;
- elle offre une bonne contention vis-à-vis des problème d'aérosols et d'odeurs;
- elle est rustique et s'adapte à tout type de sol, les interventions sont de ce fait peu fréquentes et ne gênent pas les opérations d'épandage ;
- le système racinaire (racines + rhizome) très dense et peu profond est favorable à l'infiltration des effluents, à l'adsorption et à l'assimilation des éléments nutritifs.

Ainsi, dans une forme de réalisation particulièrement préférée de la plantation selon l'invention, les espèces végétales plantées dans les régions de forte densité sont choisies parmi les espèces de bambous.

Dans un mode de réalisation particulier, l'ensemble des espèces végétales capables de prélever les matières polluantes des effluents sont choisies parmi les espèces de bambous.

La plantation de bambous est constituée de préférence d'espèces de bambous choisies pour optimiser le prélèvement de matière organique et la production de chaumes. En particulier, les espèces choisies ont au moins l'un des critères suivants et de préférence une combinaison de ces différents critères :
- ils ont une grande taille, de préférence supérieure à quatre mètres ;
- la chaume, exportée hors du site de traitement à maturité, constituant l'organe de dépollution, est de gros diamètre, de préférence au moins 3 cm, et en moyenne 5 cm ;
- les feuilles sont des petites feuilles permettant d'augmenter les densités de plantation, par exemple des feuilles de 7-20 cm de longueur et 1,5 à 3 cm de largeur.

En particulier, l'inventeur a constaté que les espèces listées au tableau 1 étaient particulièrement appropriées en raison des critères ci-dessus définis pour leur utilisation dans les plantations équipées selon l'invention.

**Tableau 1 : Liste des espèces sélectionnées**

| nom | taille m | feuille (cm) | | code | caractéristiques | diam chaume cm | résistance au froid | densité de plantation m² |
|---|---|---|---|---|---|---|---|---|
| | | longueur | largeur | | | | | |
| *Arundinaila gigantea tecta* | 1,5 à 2 | 25 | 3 | Agt | traçant-hygrophile | | moyenne | 8 |
| *Phyllostachys purpurata solida* | 3 | 12 | 1,5 | Pps | port droit-hydrophile | 5 | bonne | 10 |
| *Phyllostachys heteroclada (P. congesta)* | 3 à 4 | 7 à 13 | 1,5 | Ph | port droit-hydrophile | 5 | bonne | 10 |
| *Pseudosasa japonica* | 4 | 35 | 3 | Pj | port droit, touffu | 1 | bonne | 10 |
| *Phyllostachys aurea* | 5 | 10 à 13 | 1,8 | Pa | port droit, touffu | 4 | moyenne | 10 |
| *Semianindinaria fastuosa* | 6 | 20 | 2,5 | Sf | port droit - croissance décalée en hiver | 4 | moyenne à bonne | 6 |
| *Phyllostachys purpurata* | 6 | 7 à 13 | 1,5 | Pp | port droit - hydrophile | 5 | bonne | 10 |
| *Phyllostachys purpurata 'straightstem'* | 8 à 10 | 7 à 13 | 1,5 | Pp'st' | port droit | 5 | bonne | 25 |
| *Phyllostachys edulis f.pubescens* | 4 à 12 | 8 à 12 | 1,2 | Pep | port droit | 4 à 10 | moyenne | 10 |
| *Phyllostachys nigra f. henonis et boryana* | 8 à 10 | 12 à 15 | 1,5 | Pn H:b | port droit | 5 à 6 | bonne | 25 |
| *Phyllostachys viridis (et var)* | 8 à 12 | 8 à 12 | 2 | Pv | port droit | 5 à 7 | moyenne à bonne | 25 |
| *Phyllostachys bambusoides (et var)* | 6 à 9 | 8 à 20 | 3 | Pb , | port tombant de la cime | 3,5 à 5 | faible | 25 |
| *Phyllostachys nuda* | 6 | 8 à 15 | 2 | Pn | port tombant de la cime | 5 | bonne | 25 |
| *Phyllostachys bisseti* | 7 | 7 à 10 | 1,2 | Pbi | port droit incliné | 4 | bonne | 50 |
| *Phyllostachys flexuosa* | 5 | 12 | 1,5 | Pf | port tombant de la cime - sol calcaire touffu/résiste au vent | 3 | bonne | 25 |
| *Arundinaria linearis (Pleiblastus linearis)* | 3 | 18 | 0,7 | AI | | | moyenne | 10 |

De préférence, les espèces de bambous sont plantées de façon concentrique, à raison d'une espèce de bambous par cercle. L'espacement de chaque cercle et le nombre de plants par cercle est calculé en fonction du niveau de prélèvement recherché et de la densité appropriée pour chaque espèce. La plantation en concentrique permet ainsi de faciliter le contrôle de la densité et donc des niveaux de prélèvement par le simple contrôle du nombre de plants par cercle.

Dans une forme de réalisation préférée, les espèces de bambous plantées dans la région de forte densité sont choisies parmi des espèces permettant des densités de peuplement d'au moins 1 plant pour 10 m², et en ce que les espèces de bambous plantées dans les zones périphériques de chaque îlot sont choisies parmi des espèces dont la taille moyenne des chaumes à maturité est supérieure à 6 mètres.

En particulier, les espèces de bambous plantées dans la région de forte densité sont choisies pour une majorité d'entre elles, parmi les espèces suivantes :
*Arundinaria gigantea tecta,*
*Phyllostachys purpurata solida,*
*Phyllostachys heteroclada (P. congesta),*
*Pseudosasa japonica,*
*Phyllostachys aurea,*
*Semiarundinaria fastuosa,*
*Phyllostachys purpurata,*
*Phyllostachys edulis f.pubescens,*
*Arundinaria linearis (Pieiblastus linearis);*
et les espèces de bambous plantées dans les zones périphériques de chaque îlot sont choisies pour une majorité d'entre elles, parmi les espèces suivantes :
*Phyllostachys purpurata 'straightstem',*
*Phyllostachys nigra f. henonis et boryana,*
*Phyllostachys viridis (et var),*
*Phyllostachys bambusoides (et var),*
*Phyllostachys nuda,*
Phyllostachys bisseti,
*Phyllostachys flexuosa.*

La plantation selon l'invention peut également comporter dans un mode de réalisation particulier en zone basse en bordure du collecteur des espèces de bambous choisies parmi des espèces hygrophiles, telles que l'espèce *Arundinaria gigantea tecta.*

On considèrera une espèce ou plusieurs espèces en proportion majoritaire dans une partie de l'îlot, lorsque le nombre de plants de bambous de ces espèces représente plus de 75%, de préférence plus de 90% et mieux 100% des espèces de bambous plantées dans ladite partie de l'îlot.

Pour le traitement d'effluents de caves vinicoles, ou d'autres effluents dont la production maximale se situe en fin d'automne et/ou en hiver, chaque îlot peut comporter avantageusement une ou plusieurs eipèce(s) de bambous à croissance décalée en hiver, telle que l'espèce *Semiarundinaria fastuosa,* permettant le traitement d'effluents de cave vinicole dont la production est maximale en fin d'automne et/ou en hiver.

Dans une forme de mise en oeuvre particulièrement préférée, les espèces de bambous sont plantées de façon concentrique à raison d'une espèce de bambous par cercle, et, pour chaque cercle numéroté ci-après du centre de l'îlot vers sa périphérie, les espèces de bambous plantés sont choisies comme suit :
cercle 1 : *Semiarundinaria fastuosa*
cercle 2 : *Semiarundinaria fastuosa*
cercle 3 : *Semiarundinaria fastuosa*
cercle 4 : *Phyllostachys edulis f.pubescens*
cercle 5 : *Phyllostachys edulis f.pubescens*
cercle 6 : *Phyllostachys heteroclada (P. congesta)*
cercle 7 : *Phyllostachys purpurata*
cercle 8 : *Phyllostachys nigra f. henonis et boryana*
cercle 9 : *Phyllostachys viridis (et var)*
bordure du fossé central : *Arundinaria gigantea* tecta.

Le nombre de bambous plantés par cercle varie, notamment en fonction de l'espacement choisi entre chaque cercle.

L'îlot ainsi constitué comporte en son centre l'espèce *Semiarundinaria fastuosa* à croissance décalée en hiver et dont la phase de prélèvement maximale se situe en fin d'automne, correspondant à la période de traitement des effluents de caves vinicoles. Pour cette raison, une telle configuration est en particulier appropriée dans le cadre du traitement d'effluents de caves vinicoles.

Dans le cas de plantations équipées pour le traitement d'effluents domestiques ou agricoles dont la production est importante et journalière, les espèces de bambous plantées dans la région de forte densité et/ou dans la zone basse de la plantation sont de préférence choisies parmi les espèces hydrophiles ou hygrophiles.

En particulier, dans un mode de réalisation préféré, les espèces de bambous sont plantées de façon concentrique à raison d'une espèce de bambous par cercle, et, pour chaque cercle numéroté ci-après du centre de l'îlot vers la périphérie, les espèces de bambous plantées sont choisies comme suit :
cercle 1 : *Phyllostachys purpurata solida*
cercle 2 : *Phyllostachys purpurata solida*
cercle 3 : *Phyllostachys heteroclada (P. congesta)*
cercle 4 : *Phyllostachys purpurata*
cercle 5 : *Semiarundinaria fastuosa*
cercle 6 : *Phyllostachys edulis f.pubescens*
cercle 7 : *Phyllostachys purpurata 'straightstem'*
cercle 8 : *Phyllostachys bambusoides (et var)*
cercle 9 : *Phyllostachys viridis (et var)*
angle carré : *Arundinaria linearis (Pleiblastus linearis)*
bordure rigole bas : *Arundinaria gigantea tecta*

L'îlot ainsi constitué comporte des espèces hydrophiles supportant les excès d'eau sur les trois premiers cercles ainsi qu'au cercle 7. Une telle configuration de la plantation est adaptée au traitement des eaux usées.

Les effluents domestiques (eaux usées, boues d'épuration) ou agricoles (lisiers) se caractérisent par une production journalière continue et la présence de micro-organismes d'origine fécale qui empêche l'irrigation à la raie (eau au contact de l'air) pour des mesures de sécurité sanitaire.

La plantation est par conséquent, de préférence équipée
a) d'un réseau de drains percées pour l'alimentation des îlots en effluents;
b) d'une canalisation pour la récupération des effluents non infiltrés en zone basse;
c) d'une rigole en zone basse pour l'évacuation des eaux de pluie ;
d) le cas échéant, d'une bâche permettant d'empêcher l'infiltration des eaux de pluie, suffisamment fine pour ne pas empêcher la croissance des bambous.

Les effluents peuvent être préalablement prétraités, par exemple, par une fosse septique en assainissement autonome ou par la filière classique d'épuration biologique. Dans ce dernier cas, le procédé et l'installation de l'invention servent de traitement tertiaire. L'installation doit permettre l'amenée des effluents (pré)traités à un réseau de drains de surface percés.

Les drains sont posés à même le sol. Il s'agit par exemple de drains de type PVC ou en acier galvanisé. Ils peuvent être posés sur une couche de gravier également répartie sur un film anti-contaminant de façon à éviter les remontées des racines dans les drains. Les drains peuvent également être couverts d'une couche de gravier pour leur protection.

L'îlot est formé sur un terrain en pente de façon à permettre l'écoulement en gravitaire des effluents via le réseau de drains percés et l'infiltration des effluents au fur et à mesure de l'écoulement. La pente du terrain est ainsi définie en fonction de la perméabilité du sol en place.

Lorsque le terrain est saturé d'eau, l'effluent aura tendance à s'écouler dans le drain et à ne pas s'infiltrer. L'installation prévoit donc, en bas de terrain, une canalisation de récupération des effluents non traités qui sont ensuite ré-envoyés vers le bassin de stockage.

Etant donné l'apport continu d'effluent, il convient de limiter les autres apports, et notamment ceux dus à la pluie. Dans un mode de réalisation particulier, une bâche est placée entre les bambous pour que l'eau de pluie ruisselle au lieu de s'infiltrer. Cette eau est évacuée en bas de terrain au moyen d'une rigole prévue à cet effet. Une telle bâche peut en particulier être utile, tant que la densité de peuplement n'est pas à son maximum. La bâche est suffisamment fine de telle sorte que chaque nouvelle pousse puisse aisément traverser la bâche qui, au fur et à mesure de sa dégradation, peut être évacuée lors de l'entretien des bambous.

Les « frontières » de chaque îlot sont de préférence formées par une barrière à rhizome dont le but est d'empêcher la propagation du rhizome hors de l'unité de traitement et de s'assurer que l'ensemble des prélèvements des bambous plantés dans l'îlot est réalisé dans la zone délimitée.

Ainsi, afin de contrôler l'alimentation en effluent sur chaque îlot et leurs prélèvements, chaque îlot est de préférence entouré d'une barrière à rhizome et le dispositif d'amenée des effluents comprend des moyens permettant de contrôler de façon indépendante l'irrigation ou l'épandage de chaque îlot. En particulier, le dispositif d'amenée des effluents permet une alimentation par bachée des effluents, par exemple à l'aide d'augets à bascule.

A titre d'exemple, chaque îlot comprend de préférence en moyenne 1000 à 5000 chaumes par hectare, et est de préférence d'une superficie inférieure à 2000 m² (soit environ 25 m de rayon) dans le cas d'un drainage à l'aide d'un fossé collecteur central des effluents.

L'invention vise également un procédé de traitement d'effluents organiques par bio-assainissement caractérisé en ce qu'il comprend :
a) l'irrigation ou l'épandage des effluents organiques à traiter sur une plantation de bambous, ladite plantation constituant le site de traitement;
b) la coupe des chaumes obtenus après croissance des bambous et leur transport hors du site de traitement ; et,
c) le cas échéant, la récupération des effluents non infiltrés et leur retraitement par ledit procédé.

Le procédé selon l'invention sera avantageusement mis en oeuvre sur des plantations équipées pour le traitement des effluents organiques, détaillées ci-dessus.

Le procédé de l'invention vise en particulier le traitement d'effluents industriels de type agroalimentaire et notamment d'effluents de caves vinicoles. Dans ce cas, l'irrigation ou l'épandage des effluents peut être réalisé en surface, au contact de l'air.

Les effluents d'industries agroalimentaires, notamment des caves vinicoles, se caractérisent en général par une production saisonnière, des quantités importantes de matières organiques et l'absence totale de micro-organismes d'origine fécale. L'absence de micro-organismes d'origine fécale permet un épandage ou irrigation des effluents en surface, au contact de l'air. Le procédé permet ainsi, le cas échéant après une première filtration des effluents, le pompage des effluents du site de production vers des moyens de stockage, tels qu'une citerne. La taille de la citerne sera choisie de préférence de façon à permettre un stockage des effluents équivalent à quelques jours de stockage. L'installation pour la mise en oeuvre du procédé doit ensuite permettre l'amenée des effluents vers le (ou les) points plus élevés des îlots, par exemple au moyen d'une canalisation ou d'un canal, de préférence par écoulement par gravité.

Les effluents liquides ruissellent des points élevés de l'îlot vers le collecteur et s'infiltrent au fur et à mesure de leur parcours. Les effluents semi-liquides sont épandus, au moyen par exemple de tuyaux enrouleurs mobile : le tuyau est déployé jusqu'en bas du terrain, puis en s'enroulant, il remonte et dépose la même quantité de boues au fur et à mesure de son parcours. Les pentes de l'îlot de part et d'autre du collecteur sont déterminées en fonction de la perméabilité du sol de façon proportionnelle.

Lorsque l'épandage des effluents est saisonnier, les plantations sont irriguées de préférence au minimum de leurs besoins hors-saison d'épandage, afin de maximiser les prélèvements pendant la période d'apport des effluents.

Dans une forme de mise en oeuvre préférée, les plantations sont soumises à un stress hydrique pendant une période précédant le premier épandage, de préférence un mois avant le premier épandage.

Le procédé est également approprié pour le traitement d'effluents agricoles ou domestiques. Le procédé sera avantageusement mis en oeuvre sur une plantation équipée pour le traitement des effluents agricoles ou domestiques, et en particulier une plantation adaptée pour un apport important et journalier des effluents et une irrigation au moyen de drains percés, telle que celles décrites plus haut.

Les caractéristiques de l'invention mentionnées ci-dessus, ainsi que d'autres, apparaîtront plus clairement à la lecture de la description suivante de deux exemples d'installation selon l'invention, ladite description étant faite en relation avec les dessins joints, pour lesquels :
- la figure 1 est une vue en plan d'une plantation équipée pour le traitement d'effluents de caves vinicoles selon l'invention ;

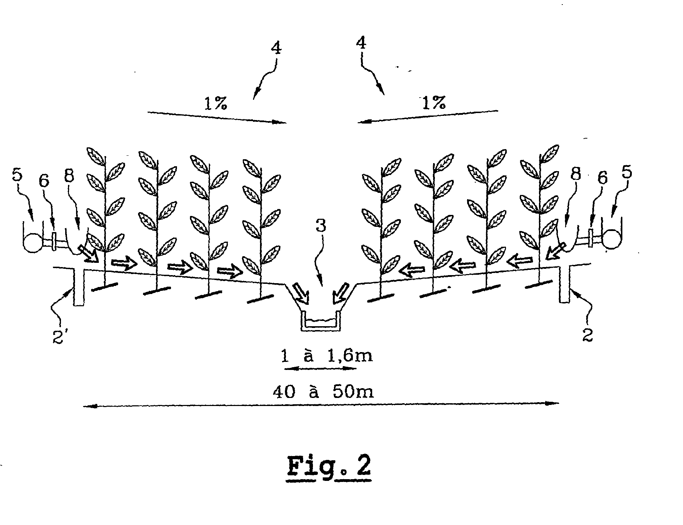

- la figure 2 est une vue en coupe d'un îlot d'une plantation équipée pour le traitement d'effluents de caves vinicoles selon l'invention ;

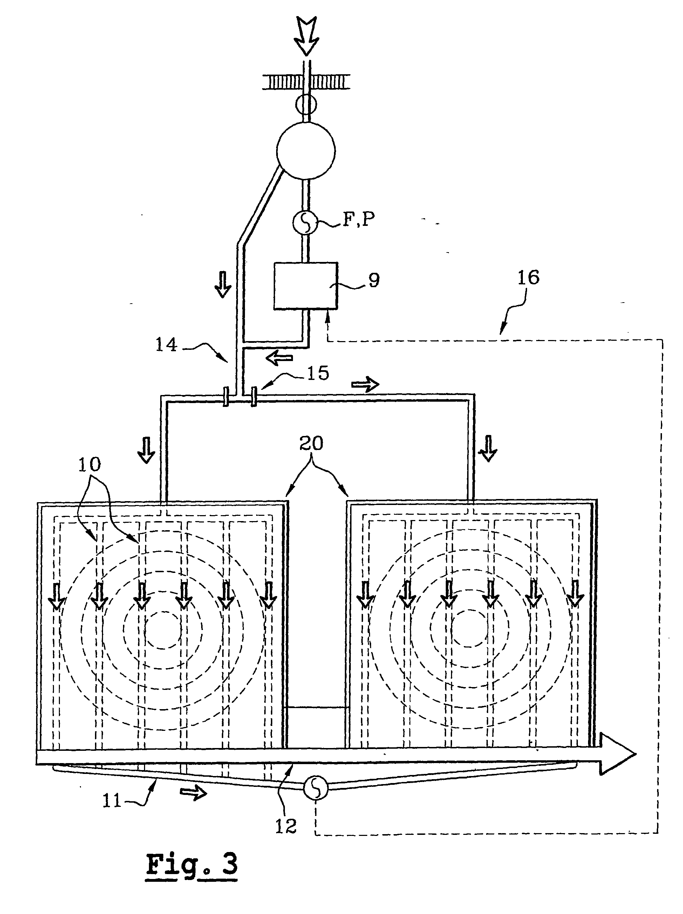

- la figure 3 est une vue en plan d'une plantation équipée pour le traitement d'eaux usées selon l'invention ;

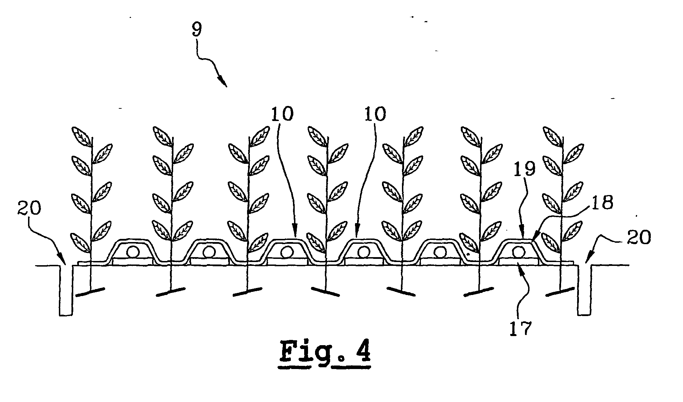

- la figure 4 est une vue en coupe d'un îlot d'une plantation équipée pour le traitement d'eaux usées selon l'invention.

Les symboles P et F signifient respectivement « moyens de pompage » et « moyens de filtration ». Les flèches en gras indiquent la direction générale des effluents traités.

### EXEMPLES

### EXEMPLE 1 : Procédé et plantation équipée pour le traitement d'effluents de caves vinicoles (d'une production inférieure à 5 000 eh)

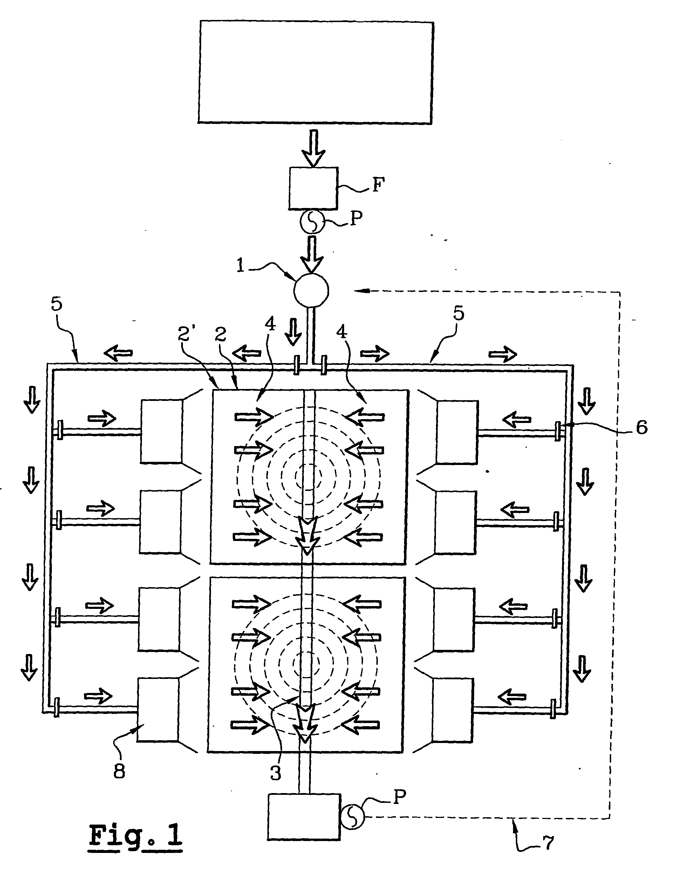

L'exemple qui suit concerne une plantation de bambous équipée pour le traitement d'effluents de caves vinicoles, telle qu'illustrée à la figure 1.

L'installation de traitement des effluents industriels agroalimentaires en exemple est conçue de façon rustique avec un épandage en surface, au contact de l'air.

Après une filtration, les effluents sont pompés du site de production (une cave vinicole) vers une citerne de stockage (1) (correspondant à 5 jours de production moyenne), cette citerne étant par mesure de sécurité et pour permettre l'entretien, doublée par une citerne équivalente.

### 1.1 Dispositif d'amenée

En fond de citerne, une vanne permet l'écoulement des effluents dans une canalisation PVC de diamètre suffisant par rapport à la production d'effluent et la pente du site, ou bien un canal béton en U.

L'amenée des effluents se répartit alors en deux files (5).

Chaque file est équipée de vanne: l'une est en position ouverte tandis que l'autre est en position fermée. L'eau s'écoule dans la branche disponible. Celle-ci est équipée de plusieurs vannes de même type (6) pilotant (en position ouverte) des branches secondaires qui aboutissent dans un auget à bascule (8). Celui-ci se remplit. Une fois plein, une poire de niveau commande la fermeture de la vanne de la première sous-branche pour permettre l'écoulement des eaux jusqu'à la sous-branche suivante.

L'auget à bascule se vide sur une lame de répartition dont la plus grande largeur permet d'inonder la largeur de terrain planté de bambous, souhaitée.

Pendant ce temps, l'auget à bascule suivant se remplit, une fois plein: fermeture de la vanne de la sous-branche n°2, l'auget à bascule se vide, l'eau à traiter s'écoule désormais jusqu'à la sous-branche n° 3, etc.

En fin de branche principale, le dernier auget à bascule actionne les vannes de répartition de la tête du dispositif (fermeture de la vanne de la première file, ouverture de la seconde) ainsi que l'ouverture de toutes les vannes des sous-branches de la file qui vient de servir: les effluents sont donc envoyés sur l'autre file qui va fonctionner comme la première.

La pente du dispositif d'amenée est conçue de telle sorte que la sous-branche soit plus pentue que la branche principale. La pente de la branche principale est au minimum de 0,5%.

Ce dispositif peut également se gérer manuellement ou bien sur un nombre limité d'îlots (en cas d'intervention sur l'un par exemple).

L'alimentation du système se fait par bachée. L'eau ruisselle de l'auget vers le fossé central et-s'infiltre au fur et à mesure de son parcours.

La capacité de la pompe et sa puissance sont définies en fonction de la production d'effluents mais également de la pluviométrie de sorte qu'il y ait dans le fossé central 10 cm d'eau maximum en condition normale.

### 1.2 Les îlots plantés de bambous

Les îlots (2) sont plantés de façon concentrique: les espèces plantées le plus densément vers le centre, les espèces les moins denses vers la périphérie.

Chaque îlot est traversé par un canal central (3) en zone basse. La pente (4) de chaque coté du canal est d'au moins 1%. En bordure de ce canal, on retrouve les espèces les plus tolérantes aux excès d'eau.

Ce canal collecteur de 20 à 50 cm de largeur de fond est bétonné en fond. Le fond du fossé est à - 1 m du terrain naturel (TN). II est bétonné jusqu'à - 0,8 m du TN (pose d'un canal en U par exemple). A partir de là, le fossé s'élargit de sorte que les talus présentent une pente suffisamment stable (2/1 ou 3/2).

Le fond bétonné permet ainsi la récupération et l'écoulement des eaux vers un regard dans lequel une pompe permet le renvoi des eaux vers la citerne de stockage (7). Dans ce regard, il est également possible de suivre la qualité de l'eau.

Le reste du canal collecteur permet de drainer le terrain de chaque partie de l'îlot, dans le but d'évacuer le surplus d'eau et de désaturer le sol. Pour ce faire, le rayon de chaque îlot est inférieur à 25 m.

Le nombre d'îlots est au minimum de 2, afin de permettre les interventions sur un îlot (coupe de chaume, entretien...) pendant que l'autre est en fonctionnement.

Chaque îlot est entouré d'une barrière à rhizome, type polyéthylène haute densité, installée sur le sol en place par une trancheuse sur une profondeur de 70 cm.

En sol sableux, un fossé de drainage central n'est pas suffisant, car la perméabilité des matériaux est très importante, ce qui favorise la percolation: un système de drainage plus poussé est alors mis en place entre 70 à 80 cm de profondeur, celui-ci pouvant aboutir au fossé central.

Une espèce par cercle est plantée. Un îlot pour le traitement d'effluents de cave est constitué comme suit :
cercle 1 : *Semiarundinaria fastuosa* (4 plants)
cercle 2 : *Semiarundinaria fastuosa* (8 plants)
cercle 3 : *Semiarundinaria fastuosa* (13 plants)
cercle 4 : *Phyllostachys edulis f.pubescens* (10 plants)
cercle 5 : *Phyllostachys edulis f.pubescens* (13 plants)
cercle 6 : *Phyllostachys heteroclada (P. congesta)* (15 plants)
cercle 7 : *Phyllostachys purpurata* (18 plants)
cercle 8 : *Phyllostachys nigra f. henonis et boryana* (8 plants)
cercle 9 : *Phyllostachys viridis (et var)* (9 plants)
bordure du fossé central : *Arundinaria gigantea tecta* (9 plants).

Chaque cercle est espacé de 2 mètres environ.

### 1.3 Dimensionnement

L'apport d'effluents de caves vinicoles est saisonnier, d'où la nécessité le reste de l'année d'irriguer suffisamment la plantation (au minimum de ses besoins) pour qu'elle soit en mesure de prélever les apports polluants le temps venu.

La plantation est soumise à un stress hydrique 1 mois avant l'épandage.

1 ha de plantation permet ainsi de traiter 5000 à 10000 m³ d'effluents en 2 mois, ce qui correspond à la production d'effluent d'une cave de 10 000 hl.

Le dimensionnement définitif se calcule en fonction des charges polluantes (notamment en fonction de la charge en potassium et de demande chimique en oxygène)

### EXEMPLE 2 : Procédé et plantation équipée pour le traitement des eaux usées

L'exemple qui suit concerne une installation de traitement des eaux usées.

Les eaux usées se caractérisent par une production journalière continue et par la présence de micro-organismes d'origine fécale qui empêche l'irrigation à la raie pour des mesures de sécurité sanitaire. C'est pourquoi le dispositif comprend un réseau de drains de surface.

### 2.1 Dispositif d'alimentation des eaux usées

Le dispositif d'alimentation est de type PVC ou acier galvanisé. L'alimentation principale (14) à partir de la filière de (pré)traitement se répartit en au moins deux files, pouvant fonctionner par alternance ou simultanément (par simple ouverture de vanne (15)). Chaque file alimente un réseau de drains (10) fonctionnant simultanément.

Les drains sont posés à même le sol; sur une couche de gravier (17) de quelques centimètres également répartie sur un film anti-contaminant (18) pour éviter les remontées des racines dans le drain.

Le drain de type assainissement autonome est en PVC de diamètre de 50mm minimum. Il est également couvert par une couche de gravier de 10cm pour sa protection (19).

Les drains sont placés en inter-rang des bambous, environ tous les 2 mètres (comme l'espacement de deux cercles sur lesquels sont positionnés les bambous écartés les uns des autres pour avoir la densité requise à leur développement).

La pente du terrain est définie en fonction de la perméabilité du sol en place. Lorsque le terrain est saturé d'eau, l'effluent aura tendance à s'écouler dans le drain et à ne pas s'infiltrer. De ce fait, il est prévu en bas de terrain une canalisation de récupération des eaux non traitées qui sont ensuite ré-envoyées vers le bassin de stockage.

### 2.2 Ilots plantés de bambous

La plantation est de même type que celle déjà énoncée dans l'exemple précédent : plantation concentrique, mélange d'espèces (avec prédominance de celles qui supportent les excès d'eau notamment en bas de terrain), barrière à rhizome autour de chaque îlot (70 cm de profondeur).

Etant donné l'apport continu d'effluent (dans le cadre du traitement des eaux usées), il convient de limiter au maximum les autres apports (notamment ceux dus à la pluie). De ce fait, une bâche plastique noire est placée entre les bambous pour que l'eau de pluie ruisselle au lieu de s'infiltrer. Cette eau est évacuée en bas de terrain. L'utilité de cette bâche est importante les 3 premières années, tant que la densité de peuplement n'est pas à son maximum. Chaque nouvelle pousse pourra aisément traverser la bâche qui au fur et à mesure de sa dégradation sera évacuée lors de l'entretien des bambous.

Un îlot pour le traitement des eaux usées est constitué comme suit :
cercle 1 : *Phyllostachys purpurata solida* (3 plants)
cercle 2 : *Phyllostachys purpurata solida* (5 plants)
cercle 3 : *Phyllostachys heteroclada (P. congesta)(8* plants)
cercle 4 : *Phyllostachys purpurata* (10 plants)
cercle 5 : *Semiarundinaria fastuosa* (21 plants)
cercle 6 : *Phyllostachys edulis f.pubescens* (15 plants)
cercle 7 : *Phyllostachys purpurata 'straightstem' (9* plants)
cercle 8 : *Phyllostachys bambusoides (et var)* (8 plants)
cercle 9 : *Phyllostachys viridis* (et *var)* (9 plants)
angle *carré : Arundinaria linearis (Pieiblastus linearis)* (30 plants)
bordure rigole bas : *Arundinaria gigantea tecta* (6 plants)

Chaque cercle est espacé de 2 m.

Un fonctionnement à 4 ou 5 îlots est préférable pour permettre le ressuyage de chaque parcelle. Un minimum de 2 est préférable. Le but est de ne pas asphyxier le rhizome.

### 2.3 Dimensionnement

1 ha peut être suffisant du point de vue hydraulique pour la charge de 1000 équivalents habitants (eh).

En revanche, en zone sensible, c'est à dire lorsqu'il faut abattre l'azote et le phosphore :
- 4 à 5 ha sont préférables en traitement unique (après prétraitements)
- 2 à 3 ha sont préférables en traitement tertiaire:

La densité de plantation est ainsi de l'ordre de 1500 sujets à l'hectare. Au bout de 3 ans, la densité de peuplement escomptée étant de 4000 à 4500 tiges/ha.

## Revendications

1. Plantation de bambous équipée pour le traitement d'effluents organiques, **caractérisée en ce qu'**elle est constituée d'îlot(s), chaque îlot étant aménagé sur un terrain formant un ou plusieurs plans inclinés se rencontrant dans une zone basse, et **en ce qu'**elle comprend
a. un dispositif d'amenée des effluents dans les zones plus élevées ;
b. un collecteur disposé dans la zone basse pour la récupération des effluents non infiltrés ; et,
c. le cas échéant, un dispositif de pompage des effluents non infiltrés et drainés par le collecteur en vue de leur retraitement ;
ladite plantation comportant au moins une espèce végétale choisie parmi les espèces de bambous capables de prélever par l'intermédiaire de leurs racines les matières polluantes d'effluents apportés sur chaque îlot.

2. Plantation de bambous selon la revendication 1, **caractérisée en ce qu'**elle comprend une pluralité d'espèces végétales, les espèces plantées dans la région de l'îlot dans laquelle s'effectue l'absorption maximum des effluents (dite région de forte densité) appartenant à des espèces de bambous, et les espèces plantées dans les régions périphériques de chaque îlot, notamment au niveau des zones d'apport des effluents, appartenant à des espèces dont la taille moyenne à maturité est plus importante que celle des premières espèces.

3. Plantation de bambous selon l'une quelconque des revendications 1 ou 2, **caractérisée en ce que** les espèces végétales sont plantées pour chaque îlot de façon concentrique, à raison d'une espèce par cercle et **en ce que** la région de forte densité est située dans la partie centrale de l'îlot.

4. Plantation de bambous selon l'une quelconque des revendications 1 à 3, **caractérisée en ce que** la région dite de forte densité de chaque îlot est située dans la zone basse de la plantation.

5. Plantation de bambous selon l'une quelconque des revendications 1 à 4, **caractérisée en ce qu'**elle est comporte une ou plusieurs espèces végétales choisies parmi celles dont la période de croissance maximale correspond à la période d'apport des effluents, permettant le traitement d'effluents dont la production est saisonnière.

6. Plantation de bambous selon l'une quelconque des revendications 1 à 5, **caractérisée en ce que** l'ensemble des espèces végétales capables de prélever les matières polluantes des effluents sont des espèces de bambous.

7. Plantation de bambous selon la revendication 6, **caractérisée en ce que** les espèces de bambous plantées dans la région de forte densité sont choisies parmi des espèces permettant des densités de peuplement d'au moins 1 plant pour 10 m², et **en ce que** les espèces de bambous plantées dans les zones périphériques de chaque îlot exposées au vent sont choisies parmi des espèces dont la taille moyenne des chaumes à maturité est supérieure à 6 mètres.

8. Plantation de bambous selon la revendication 7, **caractérisée en ce que** les espèces de bambous plantées dans la région de forte densité sont choisies pour une majorité d'entre elles, parmi les espèces suivantes :
*Arundinaria gigantea tecta,*
*Phyllostachys purpurata solida,*
*Phyllostachys heteroclada (P. congesta),*
*Pseudosasa japonica,*
*Phyllostachys aurea,*
*Semiarundinaria fastuosa,*
*Phyllostachys purpurata,*
*Phyllostachys edulis f.pubescens,*
*Arundinaria linearis (Pleiblastus linearis) ;*
et les espèces de bambous plantées dans les zones périphériques de chaque îlot sont choisies pour une majorité d'entre elles, parmi les espèces suivantes :
*Phyllostachys purpurata 'straightstem',*
*Phyllostachys nigra f*. *henonis* et *boryana,*
*Phyllostachys viridis (et var),*
*Phyllostachys bambusoides (et var),*
*Phyllostachys nuda,*
Phyllostachys bisseti,
*Phyllostachys flexuosa.*

9. Plantation de bambous selon l'une quelconque des revendications 6 à 8, **caractérisée en ce que** les espèces de bambous situées en zone basse en bordure du collecteur sont choisies parmi des espèces hygrophiles, telles que l'espèce *Arundinaria gigantea tecta.*

10. Plantation de bambous selon l'une quelconque des revendications 6 à 9, **caractérisée en ce que** chaque îlot comporte une ou plusieurs espèce(s) de bambous à croissance décalée en hiver, telle que l'espèce *Semiarundinaria fastuosa,* permettant le traitement d'effluents de cave vinicole dont la production est maximale en fin d'automne et/ou en hiver.

11. Plantation de bambous selon la revendication 10, **caractérisée en ce que** les bambous sont plantés de façon concentrique à raison d'une espèce de bambous par cercle, et **en ce que** les espèces plantées du centre de chaque îlot vers sa périphérie sont choisies comme suit:
cercle 1 : *Semiarundinaria fastuosa*
cercle 2 : *Semiarundinaria fastuosa*
cercle 3 : *Semiarundinaria fastuosa*
cercle 4 : *Phyllostachys edulis f.pubescens*
cercle 5 : *Phyllostachys edulis f.pubescens*
cercle 6 : *Phyllostachys heteroclada (P. congesta)*
cercle 7 : *Phyllostachys purpurata*
cercle 8 : *Phyllostachys nigra f. henonis et boryana*
cercle 9 : *Phyllostachys viridis (et var).*

12. Plantation de bambous selon l'une quelconque des revendications 6 à 9, **caractérisée en ce que** les espèces de bambous plantées dans la région de forte densité et/ou dans la zone basse de la plantation sont choisies parmi les espèces hydrophiles ou hygrophiles, permettant un apport journalier en effluents organiques, en particulier en effluents domestiques ou agricoles.

13. Plantation de bambous selon la revendication 12, **caractérisée en ce que** les bambous sont plantés de façon concentrique à raison d'une espèce de bambous par cercle, et, **en ce que** les espèces plantées du centre de chaque îlot vers la périphérie sont choisies comme suit:
cercle 1 : *Phyllostachys purpurata solida,*
cercle 2 : *Phyllostachys purpurata solida,*
cercle 3 : *Phyllostachys heteroclada (P. congesta),*
cercle 4 : *Phyllostachys purpurata,*
cercle 5 : *Semiarundinaria fastuosa,*
cercle 6 : *Phyllostachys edulis f.pubescens,*
cercle 7 : *Phyllostachys purpurata 'straightstem',*
cercle 8 : *Phyllostachys bambusoides (et var),*
cercle 9 : *Phyllostachys viridis (et var).*

14. Plantation de bambous selon l'une quelconque des revendications 11 ou 13, **caractérisée en ce qu'**elle est équipée
a. d'un réseau de drains percées pour l'alimentation des îlots en effluents ;
b. d'une canalisation pour la récupération des effluents non infiltrés en zone basse ;
c. d'une rigole en zone basse pour l'évacuation des eaux de pluie;
d. le cas échéant, d'une bâche permettant d'empêcher l'infiltration des eaux de pluie, suffisamment fine pour ne pas empêcher la croissance des bambous.

15. Plantation de bambous selon l'une quelconque des revendications 6 à 14, **caractérisée en ce que** chaque îlot est entouré d'une barrière à rhizome, et **en ce que** le dispositif d'amenée des effluents comprend des moyens permettant de contrôler de façon indépendante l'irrigation ou l'épandage de chaque îlot.

16. Plantation de bambous selon la revendication 15, **caractérisée en ce que** le dispositif d'amenée des effluents permet une alimentation par bachée des effluents, par exemple à l'aide d'augets à bascule.

17. Plantation de bambous selon l'une quelconque des revendications 6 à 16, **caractérisée en ce que** chaque îlot comprend en moyenne 1000 à 5000 chaumes par hectare, les îlots étant d'une superficie inférieure à 2000 m² par îlot.

18. Procédé de traitement d'effluents organiques par bio-assainissement **caractérisé en ce qu'**il comprend :
a. l'irrigation ou l'épandage des effluents organiques à traiter sur une plantation de bambous telle que définie dans l'une quelconque des revendications 1 à 17, ladite plantation constituant le site de traitement;
b. la coupe des chaumes obtenus après croissance des bambous et leur transport hors du site de traitement ; et,
c. le cas échéant, la récupération des effluents non infiltrés et leur retraitement par ledit procédé.

19. Procédé selon la revendication 18, **caractérisé en ce que** les effluents sont épandus ou irrigués sur une plantation équipée pour le traitement des effluents organiques selon l'une quelconque des revendications 6 à 18.

20. Procédé selon la revendication 19, **caractérisé en ce que** les effluents organiques à traiter sont des effluents industriels de type agroalimentaire et **en ce que** l'irrigation ou l'épandage des effluents est réalisé en surface.

21. Procédé selon la revendication 20, **caractérisé en ce que** l'épandage des effluents est saisonnier, et **en ce que** les plantations sont irriguées au minimum de leurs besoins hors-saison d'épandage.

22. Procédé selon la revendication 21, **caractérisé en ce que** les plantations sont soumises à un stress hydrique pendant une période précédant le premier épandage, de préférence un mois avant le premier épandage.

23. Procédé selon l'une quelconque des revendications 18 ou 19, **caractérisé en ce que** les effluents organiques à traiter sont des effluents agricoles ou domestiques et **en ce qu'**ils sont épandus ou irrigués sur une plantation selon l'une quelconque des revendications 13 à 15, le cas échéant après pré-traitement.
